# EUROPÄISCHE PATENTSCHRIFT

(11) **EP 2 867 064 B1**
(45) Veröffentlichungstag und Bekanntmachung des Hinweises auf die Patenterteilung: **15.04.2020**
(21) Anmeldenummer: 13732469.5
(22) Anmeldetag: 27.06.2013
(51) Int. Cl.: F21V 8/00, B60Q 3/54, B60Q 3/217, B60Q 3/78

(54) **KRAFTFAHRZEUGINNENBELEUCHTUNG**
VEHICLE INTERIOR LIGHTING
ÉCLAIRAGE D'INTÉRIEUR POUR VÉHICULE

(30) Priorität: 27.06.2012 DE 102012211052
(43) Veröffentlichungstag der Anmeldung: 06.05.2015
(73) Patentinhaber: Bayerische Motoren Werke Aktiengesellschaft, 80809 München (DE)
(72) Erfinder: WILLMANN, Tom, 81379 Muenchen (DE)
(86) Internationale Anmeldenummer: PCT/EP2013/063451
(87) Internationale Veröffentlichungsnummer: WO 2014/001421

(56) Entgegenhaltungen:
- EP-A1- 0 962 693
- WO-A1-2012/136334
- DE-A1-102011 006 645
- FR-A1- 2 886 238
- JP-A- 2010 070 126
- JP-A- 2010 137 793
- JP-A- 2012 096 564
- US-A- 5 345 531
- US-A1- 2004 151 430
- US-A1- 2009 190 370
- US-A1- 2010 302 020

## Beschreibung

Die Erfindung betrifft eine Kraftfahrzeuginnenbeleuchtung.

Neuere Kraftfahrzeuge verfügen im Innenraum zunehmend über sogenannte ambiente Lichtfunktionen, die je nach Fahrzeugtyp oder Zielgruppe für eine dezente oder auffallende Ausleuchtung des Innenraumes sorgen. Der Einsatz dieser Art der Beleuchtung erleichtert den Passagieren im Fahrzeug die Orientierung und schafft eine individuelle und wohnliche Atmosphäre.

Die Druckschrift JP 2010070126 A1 beschreibt eine Fahrzeuginnenbeleuchtung mit einem Lichtleiter und einem Streukörper, der in einer Ausnehmung in einer Türinnenverkleidung aufgenommen ist.

Die Druckschrift US 2004/0151430 offenbart eine Fluchtwegbeleuchtung mit mehreren Lichtleiter, die voneinander beabstandete Auskoppelbereiche aufweisen. Lichtquellen werden so gesteuert, dass ein Lauflicht entsteht.

Das Dokument US 2010/0302020 A1 offenbart eine bandförmige Anzeigevorrichtung, die z.B. auf einer Fahrzeugtür montiert werden kann und die dem Fahrer anhand eines Lauflichts ein Gefühl für die Fahrzeuggeschwindigkeit vermitteln soll.

Der Erfindung liegt die Aufgabe zu Grunde, eine auffallende und variable Kraftfahrzeuginnenbeleuchtung anzugeben.

Diese Aufgabe wird gelöst durch die Merkmale des unabhängigen Patentanspruchs. Vorteilhafte Weiterbildungen der Erfindung ergeben sich aus den abhängigen Ansprüchen.

Eine erfindungsgemäße Kraftfahrzeuginnenbeleuchtung umfasst eine Vielzahl von Lichtquellen, eine Steuereinrichtung zur Steuerung der Lichtquellen und eine Vielzahl von Lichtleitern, wobei die Lichtquellen und Lichtleiter derart ausgeführt und relativ zueinander angeordnet sind, dass Licht verschiedener Lichtquellen in verschiedene Lichtleiter eingekoppelt wird, wobei die Lichtleiter jeweils mehrere in Hauptlichtausbreitungsrichtung beabstandete Auskoppelbereiche aufweisen, die vorzugsweise in Hauptlichtausbreitungsrichtung eine Ausdehnung von größer als 5mm oder größer als 10 mm oder größer als 20mm aufweisen.

Die Auskoppelbereiche verschiedener Lichtleiter sind in Hauptlichtausbreitungsrichtung versetzt (überlappend oder nicht überlappend) zueinander angeordnet, wobei die Steuereinrichtung derart ausgeführt ist, dass die verschiedenen Lichtquellen zeitlich versetzt (überlappend oder nicht überlappend) zueinander in einen Leuchtzustand geschaltet oder aktiviert werden oder angeschaltet werden.

Das Schalten in einen Leuchtzustand kann dabei auch das Umschalten von einem ersten Leuchtzustand, in dem beispielsweise Licht einer ersten Farbe abgestrahlt wird, in einen zweiten Leuchtzustand, in dem beispielsweise Licht einer zweiten Farbe abgestrahlt wird, umfassen.

Dadurch wird beispielsweise Licht der verschiedenen Lichtquellen zeitlich nacheinander jeweils in die verschiedenen, den Lichtquellen jeweils zugeordneten Lichtleiter eingekoppelt und an verschiedenen Auskoppelbereichen ausgekoppelt. Dadurch wird mit geringem Aufwand eine vielseitig einsetzbare und funktional flexible Kraftfahrzeuginnenbeleuchtung geschaffen. Insbesondere kann so ein "laufendes Licht" oder "Lauflicht" erzeugt werden, durch dessen "Laufrichtung" beispielsweise situationsabhängig auf Bedienelemente eines Kraftfahrzeuges hingewiesen werden kann oder ein Energiefluss visualisiert werden kann.

Je nach Ausführungsvarianten kann der Übergang von einer Lichtquelle auf die nächste Lichtquelle dabei auch "fließend" erfolgen. Beispielsweise wird die Lichtstärke einer aktiven Lichtquelle kontinuierlich auf null reduziert, und gleichzeitig, danach oder zeitlich überlappend die Lichtstärke einer weiteren Lichtquelle kontinuierlich erhöht bis diese als aktive Lichtquelle ihre volle Lichtstärke abstrahlt. Dann oder nach einer vorgegebenen Zeitspanne wird die Lichtstärke dieser aktiven Lichtquelle kontinuierlich auf null reduziert, und gleichzeitig die Lichtstärke einer weiteren Lichtquelle kontinuierlich erhöht bis diese als aktive Lichtquelle ihre volle Lichtstärke abstrahlt, usw.

im Rahmen der Erfindung wird als "Hauptlichtausbreitungsrichtung" die Hauptlichtausbreitungsrichtung innerhalb des Lichtleiters, insbesondere die Richtung der Längsausdehnung des Lichtleiters, verstanden.

Vorzugsweise ist vorgesehen, dass jedem Lichtleiter eine Lichtquelle zugeordnet ist, und das Licht dieser Lichtquelle in den zugehörigen Lichtleiter eingekoppelt wird.

Es ist eine Weiterbildung der Erfindung, dass die Auskoppelbereiche durch Auskoppelemente an der Oberfläche des Lichtleiters, beispielsweise durch eine Rauhigkeit oder eine Prismierung, oder durch Auskoppelemente im Lichtleiter, beispielsweise durch Streuzentren, realisiert sind.

Bevorzugt ist vorgesehen, dass die Lichtleiter - zumindest abschnittsweise - im Wesentlichen parallel zueinander angeordnet sind. Alternativ oder ergänzend dazu sind die Lichtleiter miteinander verdrillt oder verwoben.

Gemäß einer bevorzugten Ausführungsform ist vorgesehen, dass durch die Lichtquellen jeweils Licht verschiedener Farben in die verschiedenen Lichtleiter einkoppelbar ist. Dazu können die Lichtquellen beispielsweise RGB-Leuchtdioden umfassen. Dadurch können noch auffälligere Lichteffekte erzeugt werden.

Bei einer anderen Weiterbildung ist die Steuereinrichtung zur Steuerung der Lichtquellen hardwaretechnisch und/oder programmtechnisch derart eingerichtet und mit den Lichtquellen gekoppelt, dass Licht der verschiedenen Lichtquellen nacheinander jeweils in die verschiedenen, den Lichtquellen jeweils zugeordneten Lichtleiter eingekoppelt wird. Insbesondere eine zeitlich sequentielle und zyklische Aktivierung der Lichtquellen kann dabei besonders vorteilhaft sein.

Vorzugsweise wird dabei zunächst eine erste Lichtquelle aktiviert, um Licht in einen ersten Lichtleiter einzukoppeln. Mit (gleichzeitig, kurz davor oder kurz danach) der Deaktivierung dieser ersten Lichtquelle wird eine zweite Lichtquelle aktiviert, um Licht in einen zweiten Lichtleiter einzukoppeln, usw. Mit der Deaktivierung einer letzten Lichtquelle wird dann wieder die erste Lichtquelle aktiviert, um Licht in den ersten Lichtleiter einzukoppeln.

Im Folgenden wird die Erfindung anhand von Beispielen unter Bezugnahme auf die folgenden Figuren näher erläutert:
- Figur 1: zeigt eine vereinfachte schematische Prinzipdarstellung einer Gruppe von Lichtleitern in Seitenansicht;
- Figuren 2, 3, 4: zeigen jeweils eine vereinfachte schematische Prinzipdarstellung einer Gruppe von Lichtleitern in Schnittansicht;
- Figuren 5, 6: zeigen jeweils eine vereinfachte schematische Prinzipdarstellung einer Gruppe von Lichtleitern in Seitenansicht;
- Figuren 7,8: zeigen jeweils eine vereinfachte schematische Prinzipdarstellung einer Gruppe von Lichtleitern in Schnittansicht;
- Figuren 9,10: zeigen jeweils eine vereinfachte schematische Prinzipdarstellung einer Gruppe von Lichtleitern in Schnittansicht;
- Figur 11: zeigt eine vereinfachte schematische Prinzipdarstellung einer ersten Kraftfahrzeuginnenbeleuchtung;
- Figur 12: zeigt eine vereinfachte schematische Prinzipdarstellung einer zweiten Kraftfahrzeuginnenbeleuchtung.

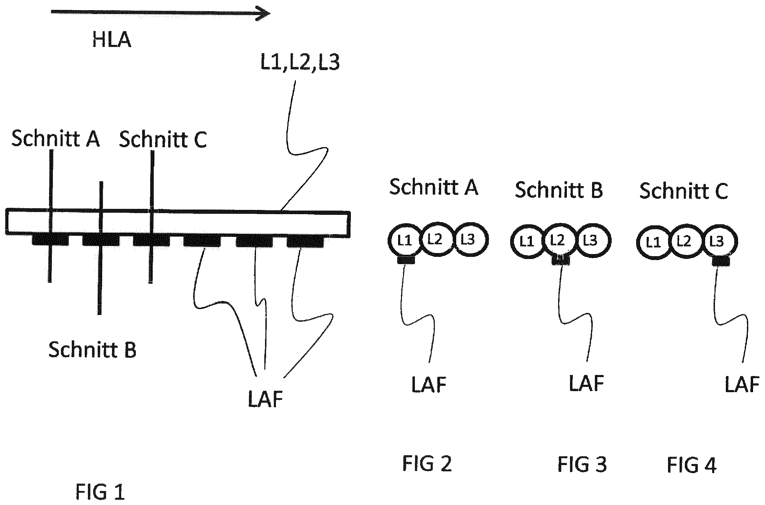

Figur 1 zeigt eine Gruppe von drei Lichtleitern L1,L2,L3 in Seitenansicht. Die Lichtleiter L1 ,L2,L3 weisen an der Unterseite jeweils in Hauptlichtausbreitungsrichtung HLA zueinander beabstandete Lichtauskoppelflächen LAF auf. Die Lichtauskoppelflächen LAF sind in dieser schematischen Darstellung nur zur Verdeutlichung als unter den Lichtleitern angeordnete Körper dargestellt. Tatsächlich können die Lichtauskoppelflächen LAF beispielsweise durch eine Aufrauhung oder Prismierung der entsprechenden oberen oder unteren Lichtleiteroberfläche realisiert sein.

Durch die Lichtauskoppelflächen LAF werden Lichtauskoppelbereiche realisiert, an denen Licht bevorzugt aus dem entsprechenden Lichtleiter L1,L2,L3 ausgekoppelt wird und beispielsweise im Wesentlichen senkrecht zum entsprechenden Lichtleiter L1,L2,L3 abgestrahlt wird.

Die Lichtauskoppelflächen LAF der verschiedenen Lichtleiter L1,L2,L3 oder die Lichtleiter L1,L2,L3 selbst sind derart angeordnet, dass die Lichtauskoppelflächen LAF der verschiedenen Lichtleiter L1,L2,L3 versetzt zueinander angeordnet sind. Dies wird anhand der in den Figuren 2, 3 und 4 dargestellten Schnittansichten der Gruppe der drei Lichtleiter L1,L2,L3 veranschaulicht. In Figur 2 (Schnitt A) weist nur der Lichtleiter L1 eine Lichtauskoppelfläche auf. In Figur 3 (Schnitt B) weist nur der Lichtleiter L2 eine Lichtauskoppelfläche auf. In Figur 4 (Schnitt C) weist nur der Lichtleiter L3 eine Lichtauskoppelfläche auf.

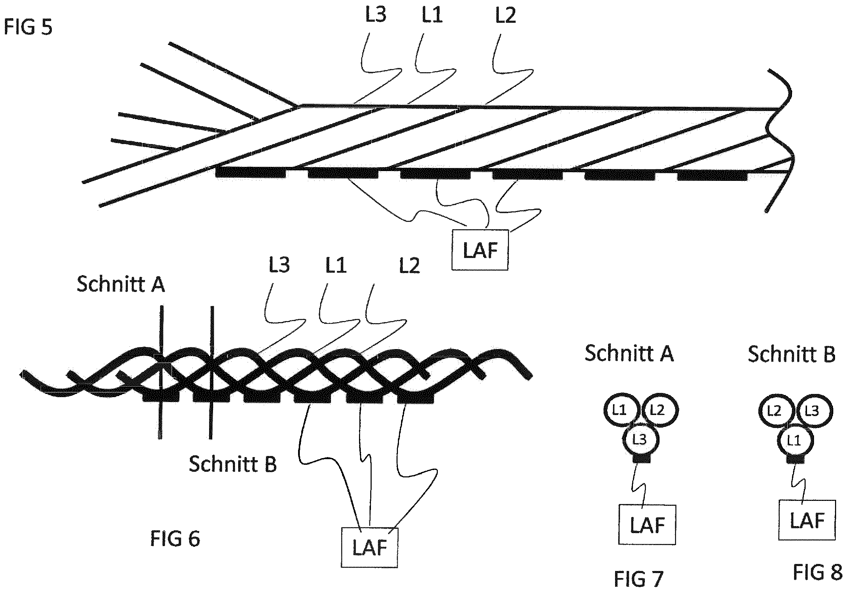

Die Figuren 5 und 6 zeigen wieder eine Gruppe von drei Lichtleitern L1,L2,L3 in Seitenansicht. Die Lichtleiter L1,L2,L3 sind in dieser Ausführungsvarianten miteinander verdrillt und weisen jeweils wieder an der Unterseite zueinander beabstandete Lichtauskoppelflächen LAF auf.

Auch hier sind die Lichtauskoppelflächen LAF der verschiedenen Lichtleiter L1,L2,L3 versetzt zueinander angeordnet. Dies wird für die Variante gemäß Figur 6 wieder anhand der in den Figuren 7 und 8 dargestellten Schnittansichten der Gruppe der drei Lichtleiter L1,L2,L3 veranschaulicht. In Figur 7 (Schnitt A) weist nur der Lichtleiter L3 eine Lichtauskoppelfläche auf. In Figur 8 (Schnitt B) weist nur der Lichtleiter L1 eine Lichtauskoppelfläche auf.

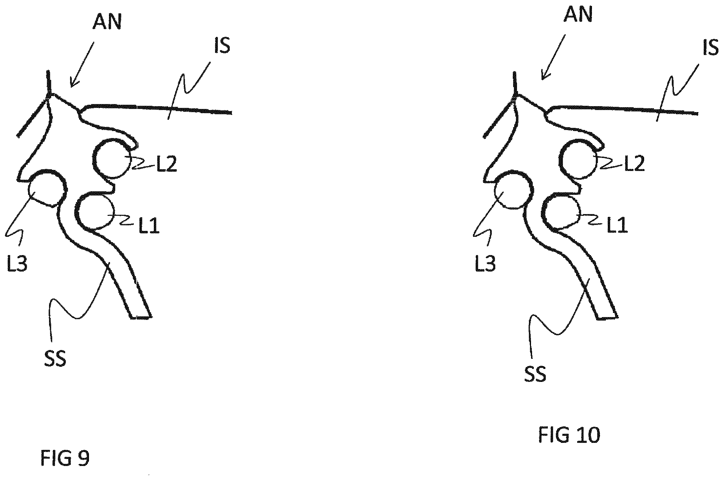

In den Figuren 9 und 10 sind wieder jeweils verschiedene Schnittdarstellungen einer Gruppe von Lichtleitern L1,L2,L3 dargestellt, die durch einen im wesentlichen transparenten Streukörper SS gehalten werden.

Der Streukörper SS ist beispielsweise aus Acryl gebildet und an einer Ausnehmung AN einer Fahrzeugtür-Innenverkleidung IS platziert. Der Streukörper SS kann am Ort der Ausnehmung AN eine Diffusionsplatte (nicht dargestellt) oder eine bedruckte Folie (nicht dargestellt) aufweisen, durch welche das durch die Streukörper SS geführte, und an der Ausnehmung AN ausgekoppelte Licht homogenisiert wird.

Um zu erreichen, dass das von den Lichtleitern L1 ,L2,L3 geführte Licht im Ergebnis zu einem großen Teil an der Ausnehmung AN ausgekoppelt wird, wird der Streukörper SS an den übrigen Oberflächen (die Oberflächen des Streukörper, die nicht an der Ausnehmung AN platziert sind) mit einer Reflexionsfolie (nicht dargestellt) beschichtet und/oder werden die versetzt zueinander angeordneten Lichtauskoppelflächen der Lichtleiter L1,L2,L3 derart platziert, dass das aus den Lichtleitern L1,L2,L3 ausgekoppelte Licht im Wesentlichen in Richtung Ausnehmung AN abgestrahlt wird.

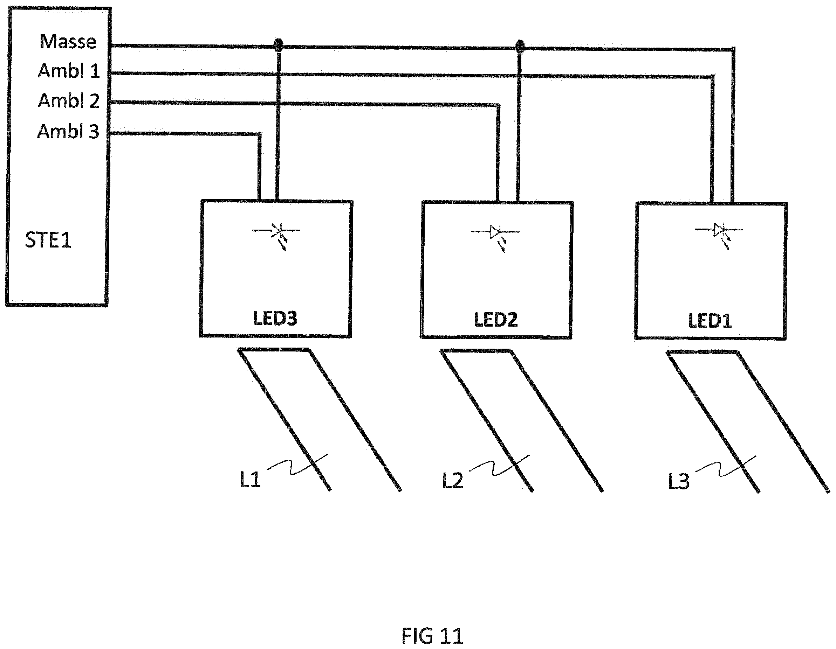

Figur 11 zeigt eine Kraftfahrzeuginnenbeleuchtung mit einer Vielzahl von Lichtleitern L1, L2, L3, die beispielsweise miteinander verdrillt sind, und von denen hier nur das nicht verdrillte Ende dargestellt ist.

Den Lichtleitern L1, L2, L3 ist als Lichtquelle jeweils eine Leuchtdiode LED1, LED2, LED3 zugeordnet. Die Leuchtdioden LED1, LED2, LED3 sind derart angeordnet, dass das durch die Leuchtdioden abgestrahlte Licht Im Wesentlichen jeweils in den zugehörigen Lichtleiter L1, L2, L3, insbesondere in dessen Stirnseite, eingekoppelt wird.

Die Leuchtdioden LED1, LED2, LED3 werden durch ein Steuergerät STE1 über die Anschlüsse Ambl1,Ambl2,Ambl3,Masse in an sich bekannter Weise angesteuert.

Gemäß einer bevorzugten Ausgestaltung erfolgt die Ansteuerung der Leuchtdioden LED1, LED2, LED3 derart, dass die Leuchtdioden LED1, LED2, LED3 zeitlich sequentiell und zyklisch aktiviert werden. Beispielsweise wird zuerst die Leuchtdiode LED3 aktiviert. Dann wird diese deaktiviert und im Zuge der Deaktivierung die Leuchtdiode LED2 aktiviert. Dann wird diese deaktiviert und im Zuge der Deaktivierung die Leuchtdiode LED1 aktiviert. Dann wird diese deaktiviert und im Zuge der Deaktivierung wieder die Leuchtdiode LED3 aktiviert, usw.

Die Aktivierung bzw. Deaktivierung der Leuchtdioden LED1, LED2, LED3 kann dabei kontinuierlich oder diskret erfolgen. Dadurch wird ein "laufendes Licht" erzeugt, das in einem Kraftfahrzeug für verschiedene Zwecke eingesetzt werden kann.

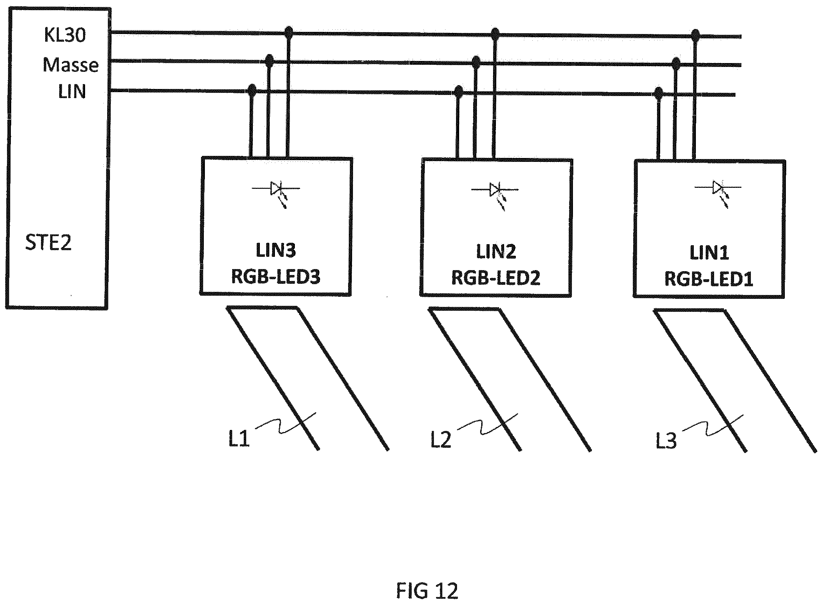

Figur 12 zeigt eine Kraftfahrzeuginnenbeleuchtung, die im Wesentlichen der Kraftfahrzeuginnenbeleuchtung gemäß Figur 11 entspricht. Gleiche Bezugszeichen bezeichnen dabei entsprechende Komponenten. Im Gegensatz zur Kraftfahrzeuginnenbeleuchtung gemäß Figur 11 werden bei der Kraftfahrzeuginnenbeleuchtung gemäß Figur 12 RGB-Leuchtdioden RGB-LED1,RGB-LED2, RGB-LED3 eingesetzt, um in die Lichtleiter L1, L2, L3 Licht verschiedener Farben einkoppeln zu können.

Dazu werden in an sich bekannter Weise (über LIN-Leitung, Masse und Klemme 30) durch ein zentrales Steuergerät STE2 drei LIN(Local Interconnect Network)-Module LIN1,LIN2,LIN3 angesteuert, die jeweils eine RGB-Leuchtdiode RGB-LED1, RGB-LED2, RGB-LED3 ansteuern. Ein LIN-Modul kann dazu beispielsweise einen LIN-Treiber, einen Controller und einen Spannungsregler umfassen.

Das Steuergerät STE2 kann dabei derart eingerichtet sein, dass nacheinander oder gleichzeitig Licht verschiedener Farben in die verschiedenen Lichtleiter L1, L2,L3 eingekoppelt wird, um je nach Ausführungsvariante besonders auffallende oder angenehme Lichteffekte zu generieren.

## Patentansprüche

1. Kraftfahrzeuginnenbeleuchtung
mit einer Vielzahl von Lichtquellen (LED1,LED2,LED3),
mit einer Steuereinrichtung (STE1,STE2) zur Steuerung der Lichtquellen (LED1,LED2,LED3),
mit einer Vielzahl von Lichtleitern (L1,L2,L3),
mit einer Fahrzeugtür-Innenverkleidung (IS) und
mit einem im Wesentlichen transparenten Streukörper (SS), der an einer Ausnehmung (AN) der Fahrzeugtür-Innenverkleidung platziert ist, und durch den die Lichtleiter (L1,L2,L3) gehalten werden,wobei die Lichtquellen (LED1,LED2,LED3) und Lichtleiter (L1,L2,L3) derart ausgeführt und relativ zueinander angeordnet sind, dass Licht verschiedener Lichtquellen (LED1,LED2,LED3) in verschiedene Lichtleiter (L1,L2,L3) eingekoppelt wird,
wobei die Lichtleiter (L1,L2,L3) jeweils mehrere, in Hauptlichtausbreitungsrichtung innerhalb des Lichtleiters, beabstandete Auskoppelbereiche (LAF) aufweisen, wobei die Auskoppelbereiche (LAF) verschiedener Lichtleiter (L1,L2,L3) in Hauptlichtausbreitungsrichtung versetzt zueinander angeordnet sind,
wobei die Steuereinrichtung (STE1,STE2) derart ausgeführt ist, dass die verschiedenen Lichtquellen (LED1,LED2,LED3) zeitlich versetzt zueinander in einen Leuchtzustand geschaltet werden.,

2. Kraftfahrzeuginnenbeleuchtung nach Anspruch 1,
bei dem die Auskoppelbereiche durch Auskoppelemente an der Oberfläche des Lichtleiters oder durch Auskoppelemente im Lichtleiter realisiert sind.

3. Kraftfahrzeuginnenbeleuchtung nach einem der vorhergehenden Ansprüche,
bei dem Lichtleiter im Wesentlichen parallel zueinander angeordnet sind.

4. Kraftfahrzeuginnenbeleuchtung nach einem der vorhergehenden Ansprüche,
bei dem die Lichtleiter miteinander verdrillt oder verwoben sind.

5. Kraftfahrzeuginnenbeleuchtung nach einem der vorhergehenden Ansprüche,
bei dem durch die Lichtquellen jeweils Licht verschiedener Farben in die Lichtleiter einkoppelbar ist.

## Claims

1. Motor-vehicle interior lighting system
with a multiplicity of light sources (LED1, LED2, LED3),
with a control means (STE1, STE2) for controlling the light sources (LED1, LED2, LED3),
with a multiplicity of light guides (L1, L2, L3),
with a vehicle interior door trim (IS), and
with a substantially transparent diffuser (SS) which is placed on a recess (AN) in the vehicle interior door trim, and by which the light guides (L1, L2, L3) are held, wherein the light sources (LED1, LED2, LED3) and light guides (L1, L2, L3) are configured and arranged relative to each other such that light from different light sources (LED1, LED2, LED3) is coupled into different light guides (L1, L2, L3), wherein the light guides (L1, L2, L3) in each case have a plurality of coupling-out regions (LAF) spaced apart in the main light propagation direction within the light guide,
wherein the coupling-out regions (LAF) of different light guides (L1, L2, L3) are arranged offset relative to each other in the main light propagation direction, wherein the control means (STE1, STE2) is configured such that the different light sources (LED1, LED2, LED3) are switched into a light-emitting state offset timewise from each other.

2. A motor-vehicle interior lighting system according to Claim 1,
in which the coupling-out regions are embodied by coupling-out elements on the surface of the light guide or by coupling-out elements in the light guide.

3. A motor-vehicle interior lighting system according to one of the preceding claims,
in which light guides are arranged substantially parallel to each other.

4. A motor-vehicle interior lighting system according to one of the preceding claims,
in which the light guides are twisted or interwoven with each other.

5. A motor-vehicle interior lighting system according to one of the preceding claims,
in which in each case light of different colours can be coupled into the light guides through the light sources.

## Revendications

1. Système d'éclairage de l'intérieur d'un véhicule automobile comprenant :
une série de sources de lumière (LED1, LED2, LED3),
un dispositif de commande (STE1, STE2) permettant de commander les sources de lumière (LED1, LED2, LED3),
une série de conducteurs de lumière (L1, L2, L3),
un habillage interne d'une porte de véhicule (IS), et
un corps de diffusion (SS) essentiellement transparent qui est positionné sur un évidement (AN) de l'habillage interne de la porte du véhicule et au travers duquel sont maintenus les conducteurs de lumière (L1, L2, L3), les sources de lumière (LED1, LED2, LED3) et les conducteurs de lumière (L1, L2, L3) étant réalisés et positionnés les uns par rapport aux autres de sorte que de la lumière de différentes sources de lumière (LED1, LED2, LED3) soit injectée dans différents conducteurs de lumière (L1, L2, L3),
les conducteurs de lumière (L1, L2, L3) comportant chacun plusieurs zones de découplage (LAF) situées à distance à leur partie interne dans la direction de propagation principale de la lumière,
les zones de découplage (LAF) de différents conducteurs de lumière (L1, L2, L3) étant décalées les unes par rapport aux autres dans la direction de propagation principale de la lumière,
le dispositif de commande (STE1, STE2) étant réalisé de sorte que les différentes sources de lumière (LED1, LED2, LED3) soient branchées dans un état d'éclairage en étant décalées chronologiquement.

2. Système d'éclairage de l'intérieur d'un véhicule automobile conforme à la revendication 1,
dans lequel les zones de découplage sont réalisées par des éléments de découplage situés sur la surface des conducteurs de lumière ou par des éléments de découplage situés dans les conducteurs de lumière.

3. Système d'éclairage de la partie interne d'un véhicule automobile conforme à l'une des revendications précédentes, dans lequel les conducteurs de lumière sont essentiellement parallèles les uns aux autres.

4. Système d'éclairage de la partie interne d'un véhicule conforme à l'une des revendications précédentes,
selon lequel les conducteurs de lumière sont torsadés, ou entrelacés les uns aux autres.

5. Système d'éclairage conforme à l'une des revendications précédentes,
dans lequel de la lumière de différentes couleurs peut respectivement être injectée dans les conducteurs de lumière par les sources de lumière.
